# EUROPÄISCHE PATENTANMELDUNG

(11) **EP 1 493 717 A1**
(43) Veröffentlichungstag der Anmeldung: **05.01.2005**
(21) Anmeldenummer: 03015056.9
(22) Anmeldetag: 03.07.2003
(51) Int. Cl.: C02F 3/20, C02F 3/06, B01F 5/04, B01F 3/04

(54) **Verfahren zum Spülen eines Reaktors zur biologischen Abwasserreinigung**

(71) Anmelder: Aqua Biotec GmbH, 23562 Lübeck (DE)
(72) Erfinder: Rüdiger, Andreas, Dr., 23552 Lübeck (DE)
(74) Vertreter: Vollmann, Heiko, Dipl.-Ing.

(57) **Zusammenfassung**

Das Verfahren dient zum Spülen eines Reaktors zur biologischen Abwasserreinigung, bei dem zum Zwecke des Spülens ein Abschnitt des Reaktors mit Wasser und Luft mit erhöhter Geschwindigkeit durchströmt wird. Diese Steuerung des Spülvorgangs erfolgt ausschließlich über Steuerung der Luftzufuhr, so dass innerhalb der Wasserzufuhr eine gesonderte Ventilsteuerung entfallen kann.

## Beschreibung

Die Erfindung betrifft ein Verfahren zum Spülen eines Reaktors zur biologischen Abwasserreinigung sowie einen solchen Reaktor zur Durchführung des vorgenannten Verfahrens.

Bei der Aufbereitung von Trinkwasser und in der Abwassertechnik werden heutzutage Verfahren angewandt, die zur Elimination von Schwebstoffen sowie zur Elimination unerwünschter Abwasserinhaltsstoffe dienen. Dies erfolgt in Reaktoren, die mit geschütteten Trägermaterialien gefüllt sind. Das Trägermaterial wird als Fläche für den Aufwuchs von aerober Biomasse genutzt, mittels derer unerwünschte Wasserinhaltstoffe biologisch aus dem Wasser abgebaut werden. Gleichzeitig dient die Trägermasse als Filter zum Rückhalten von Schwebstoffen.

Solche biologischen Filter werden in Form von Reaktoren eingesetzt und bestehen im Wesentlichen aus einem zylindrischen Behälter, der mit einem Trägermaterial mit einer Korngröße zwischen 2 und 6 mm typischerweise gefüllt ist. Als Trägermaterial kommt gebrannter Blähton, Kunststoff oder ähnliches zum Einsatz. Die Durchströmung des Reaktors erfolgt von unten nach oben. Aufgrund der sich innerhalb des Reaktors absetzenden Schwebstoffe sowie der ständig wachsenden Biomasse muss dieser regelmäßig, üblicherweise einmal täglich für eine gewisse Zeit mit Luft und Wasser und stark erhöhter Strömungsgeschwindigkeit gespült werden. Für diesen vergleichsweise kurzen Spülvorgang ist ein erheblicher apparativer Aufwand erforderlich.

Um diesen apparativen Aufwand zu verringern ist es aus EP 1 153 891 A1 bekannt, nicht den gesamten Reaktor gleichzeitig zu spülen, sondern abschnittsweise, insbesondere sektorweise. Um dies zu ermöglichen sind die in der Regel nahe des Bodens radial angeordneten Zuführrohre für Wasser und Luft jeweils mit steuerbaren Ventilen versehen, so dass für den abschnitts- bzw. sektorweisen Spülvorgang lediglich die in diesem Abschnitt bzw. Sektor befindlichen Rohre mit Wasser bzw. Luft beaufschlagt werden, wohingegen die verbleibenden Rohre abgesperrt werden. Hierzu ist es erforderlich, jedem Rohr sowohl für die Luftführung als auch für die Wasserführung ein steuerbares, insbesondere fernsteuerbares Absperrventil zuzuordnen. Da bei einem Reaktor üblicher Baugröße zwischen 20 und 60 solcher Rohre vorgesehen sind, ergibt sich hierdurch ein nicht unerheblicher apparativer Aufwand für die Ventile sowie darüber hinaus für die entsprechende Steuerung.

Vor diesem Hintergrund liegt der Erfindung die Aufgabe zugrunde, ein gattungsgemäßes Verfahren zum Spülen eines Reaktors zur biologischen Abwasserreinigung so auszubilden, dass der apparative und steuerungstechnische Aufwand zum Spülen verringert wird. Darüber hinaus soll ein entsprechender Reaktor zur Ausführung dieses Verfahrens vorgeschlagen werden, welcher kostengünstig in der Herstellung und im Betrieb ist.

Der verfahrensmäßige Teil dieser Aufgabe wird durch die in Anspruch 1 angegebenen Merkmale gelöst. Der vorrichtungsmäßige Teil dieser Aufgabe wird durch die in Anspruch 4 angegebenen Merkmale gelöst. Vorteilhafte Ausgestaltungen der Erfindung sind in den Unteransprüchen, der nachfolgenden Beschreibung und der Zeichnung angegeben.

Grundgedanke der vorliegenden Erfindung ist es, die Steuerung des Spülvorgangs ausschließlich über die Steuerung der Luftzufuhr erfolgen zu lassen. Hierdurch kann die gesamte Spülsteuerung für die Wasserzufuhr entfallen. Erstaunlicherweise hat sich gezeigt, dass allein durch Steuerung der Luftzufuhr sich auch die für den Spülvorgang erforderliche Wasserzufuhr einstellt, da bei geeigneter Ausbildung des Reaktors, insbesondere der Lanzen zum Zuführen von Luft und Wasser eine erhöhte Wasserströmung dort erfolgt, wo auch die Luftströmung erfolgt, also das Wasser durch die Luft mitgeführt wird.

Dabei ist es besonders vorteilhaft, beim sektorweisen Spülen nicht im oder gegen dem Uhrzeigersinn aufeinander folgend die Sektoren des Reaktors zu spülen, sondern nach dem Spülen eines ersten Sektors nachfolgend den gegenüberliegend angeordneten zweiten Sektor zu spülen, da hier erfahrungsgemäß der größte Strömungswiderstand zu erwarten ist, da im Randbereich des ersten Sektors, also bei den benachbarten Sektoren schon ein gewisser Mitspüleffekt erfolgt ist. Erst nachfolgend wird dann ein zwischen dem zweiten und dem ersten Sektor liegender dritter Sektor sowie nachfolgend der gegenüberliegende vierte Sektor gespült. Je nach Anzahl der Sektoren so lange, bis der Reaktor vollständig gespült ist. Dabei erfolgt bei mehr als vier Sektoren die Spülung derart, dass nach Möglichkeit zunächst die Sektoren gespült werden, die zu keinem bereits gespülten Sektor unmittelbar benachbart liegen und zuletzt diejenigen Sektoren, die zu beiden Seiten unmittelbar benachbart zu bereits gespülten Sektoren liegen.

Zur Spülung nach dem erfindungsgemäßen Verfahren ist ein Reaktor vorgesehen, wie in Anspruch 4 definiert ist. Dieser Reaktor weist in an sich bekannter Weise einen mit Trägermaterial gefüllten Behälter auf, der bodenseitig mit einer Vielzahl von in den Behälter hineinragenden Lanzen zum Einbringen von Wasser und Luft versehen ist. Dabei sind die zu den Lanzen führenden wasserführenden Leitungen kontinuierlich mit Wasser druckbeaufschlagt und. nur die zu den Lanzen führenden luftführenden Leitungen mit steuerbaren Absperrventilen versehen. Es entfallen also die beim Stand der Technik erforderlichen Absperrventile für die wasserführenden Leitungen.

Unter steuerbar im Sinne der vorliegenden Erfindung sind solche Ventile zu verstehen, die elektrisch, hydraulisch oder pneumatisch angesteuert werden können, nicht jedoch manuell steuerbare Ventile, wie sie in Form von Absperrventilen in derartigen Reaktoren ohnehin zusätzlich an jeder Lanze luft- und wasserseitig vorgesehen sind.

Zweckmäßigerweise sind die zu den Lanzen führenden luftführenden Leitungen entsprechend den zugeordneten Spülabschnitten gruppenweise und/oder einzeln steuerbar. Bei einer nur gruppenweise vorgesehen Ansteuerung kann dies zu weiteren konstruktiven Vereinfachungen führen, indem nur jeder Gruppe von luftführenden Leitungen ein zentrales steuerbares Absperrventil zugeordnet ist.

Gemäß einer Weiterbildung der Erfindung weist eine Lanze ein mit Ausnehmungen versehenes vorzugsweise aus Metall bestehendes Rohr auf, wobei die Ausnehmungen so gestaltet sind, dass sich ihr Querschnitt von innen nach außen erweitert. Ein solches Rohr bildet das Außenrohr einer Lanze und ist zum ständigen Verbleib innerhalb des Behälters vorgesehen. Damit dieses Rohr nicht durch Partikel verstopfen kann, sind die Ausnehmungen mit von innen nach außen aufweitendem Querschnitt ausgebildet, so dass sichergestellt ist, dass zumindest durch Druckerhöhung dieser Querschnitt wieder freigespült werden kann. Soweit es den innenliegenden Teil angeht, ist dieser von außen mit einem entsprechenden Werkzeug, zum Beispiel einem Reinigungswerkzeug zugänglich, so dass innenliegende Partikel mechanisch entfernt werden können. Ein solches mit Ausnehmungen versehenes Rohr besteht vorteilhaft aus Edelstahl und ist durch die Behälterwand hindurchgeführt und vorzugsweise durch Schweißen dicht und fest mit dieser verbunden. Es versteht sich, dass die Ausnehmungen nur im Bereich innerhalb des Behälters vorgesehen sind.

Um eine gleichmäßige Wasser-, Luftverteilung durch eine solche Lanze innerhalb des Reaktors zu erzeugen, ist es wichtig, dass die Lanze exakt, vorzugsweise horizontal ausgerichtet ist. Da der Behälterboden üblicherweise nicht diesen Anforderungen entspricht, ist es zweckmäßig, entsprechende Mittel zum Ausrichten des Rohrs im Behälter vorzusehen. Dies kann beispielsweise durch Anbringen einer Nivellierschraube am inneren Ende des Rohrs vorgesehen werden. Das Rohr kann dann mittels dieser Schraube ausgerichtet werden, wonach die Verschweißung mit der Behälterwand und damit die endgültige Positionierung erfolgt. Es kann gegebenenfalls am behälterinnenseitigen Ende eine weitere Schweißverbindung mit dem Behälterboden vorgesehen sein.

Innerhalb des mit Ausnehmungen versehenen Rohrs ist gemäß einer Weiterbildung der Erfindung ein ebenfalls mit Ausnehmungen versehenes Innenrohr für die Luftzufuhr angeordnet, das von einem elastischen, mit einer Vielzahl von Löchern versehenen Schlauch umgeben ist, wobei darüber hinaus Mittel vorgesehen sind, welche das Innenrohr vom Außenrohr beabstanden. Das Innenrohr für Luftzufuhr wird zweckmäßigerweise als geschlitztes Kunststoff- oder Edelstahlrohr ausgebildet. Der darüber befindliche elastische Schlauch ist mit einer Vielzahl kleiner Löcher versehen und so dimensioniert, dass die Löcher, solange der Schlauch an dem Innenrohr anliegt, verschlossen sind, so dass ein Rückfluss von Wasser in das luftführende Rohr vermieden wird. Dadurch das der Schlauch elastisch ist, wird bei Druckluftbeaufschlagung durch die Ausnehmungen im Innenrohr der Schlauch druckbeaufschlagt, wodurch er sich zumindest partiell vom Innenrohr abhebt, aufgeweitet wird und somit die durch die Ausnehmungen des Innenrohrs anstehende Druckluft über die Löcher im Schlauch in das umgebende Wasser des Außenrohrs ausströmen kann. Um dies über den gesamten Umfangs des Rohrs möglichst gleichmäßig erfolgen zu lassen, sind Abstandhaltemittel, zum Beispiel Abstandhalteringe vorgesehen, welche das Innenrohr mit dem darüber liegenden Schlauch innerhalb des Außenrohrs zentrieren.

Sowohl das Innenrohr als auch das Außenrohr sind am behälterinnenseitigen Ende stirnseitig verschlossen. Dabei bildet das Innenrohr mit dem Schlauch und den Abstandshalteringen eine Einheit, welche von außen in das Außenrohr einschiebbar bzw. aus diesem wieder herausziehbar ist. Es kann somit bei Verschleiß des Schlauches, bei Beschädigungen oder Verstopfungen das Innenrohr auf einfache Weise von außerhalb des Behälters, nachdem das Wasser abgelassen worden ist, entfernt werden, das Außenrohr von innen gereinigt werden und danach ein neues Innenrohr eingesetzt werden, ohne dass das Trägermaterial aus dem Reaktor entfernt werden muss. Es ist somit möglich, die Lanzen vollständig außerhalb des Behälters zu warten, was ein wesentlicher Vorteil gegenüber bekannten Konstruktionen nach dem Stand der Technik darstellt.

Darüber hinaus gewährleistet die erfindungsgemäße Lanzenausbildung, dass einerseits eine sehr feine Verteilung der Luft innerhalb des Wassers erfolgt und andererseits, dass bei entsprechender Luftbeaufschlagung im Bereich der Luftausströmung auch eine erhöhte Wassermitnahme erfolgt, d. h. die gewünschte Spülwirkung eintritt, und zwar ohne dass der Wasserdruck partiell erhöht wird.

Außerhalb des Behälters sind die Innenrohre aller Lanzen an eine zentrale Druckluftversorgung, vorzugsweise eine Ringleitung angeschlossen, die von einem oder mehreren Kompressoren beaufschlagt wird. Dabei ist jedem Innenrohr ein steuerbares Absperrventil zugeordnet. Die Außenrohre, die, soweit sie nach außerhalb des Behälters ragen, sind dort nicht mit Ausnehmungen versehen, sondern weisen eine dichte Herausführung des Innenrohrs auf, und sind darüber hinaus an eine zentrale Wasserversorgung in Form einer um den Behälter umlaufende Ringleitung angeschlossen, welche von einem oder mehreren Pumpenaggregaten mit Wasser, typischerweise Abwasser druckbeaufschlagt werden. Die Außenrohre sind ständig mit der Druckwasserleitung verbunden, weisen also keine steuerbaren Absperrventile auf, wie dies beim Stand der Technik der Fall ist.

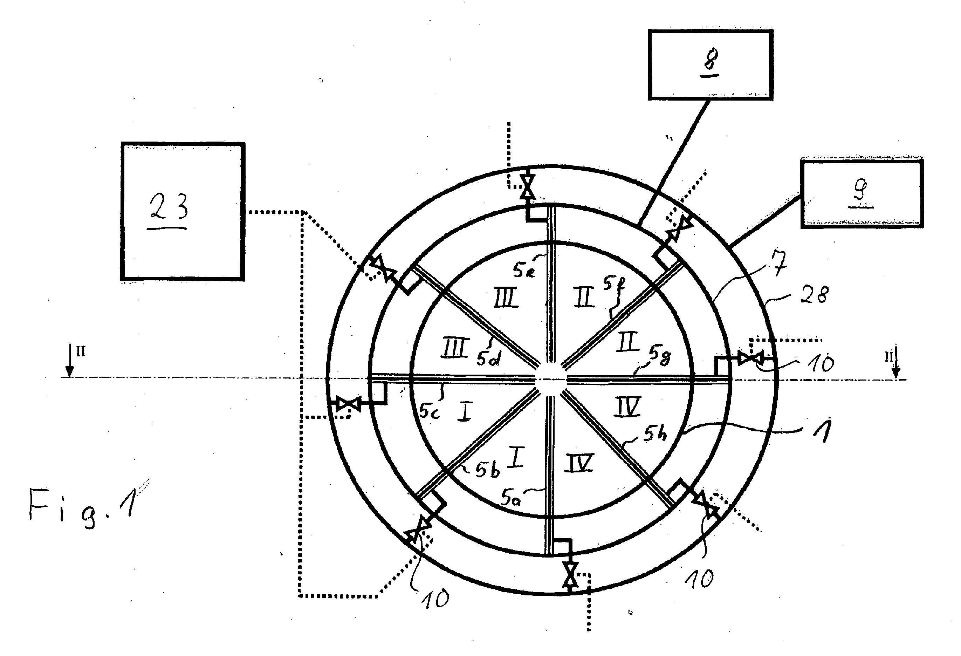

Die Erfindung ist nachfolgend anhand eines in der Zeichnung dargestellten Ausführungsbeispiels näher erläutert. Es zeigen
- Fig. 1: in stark vereinfachter schematischer Darstellung die Anordnung der Lanzen innerhalb des Behälters und deren anschlussseitige Verschaltung im Wesentlichen in Draufsicht,

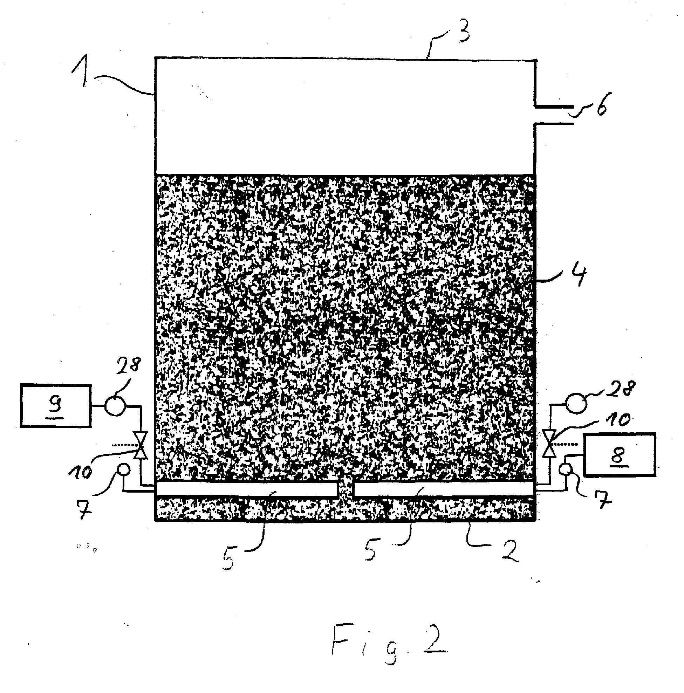

- Fig. 2: in stark vereinfachter schematischer Darstellung einen Längsschnitt durch den Reaktor,

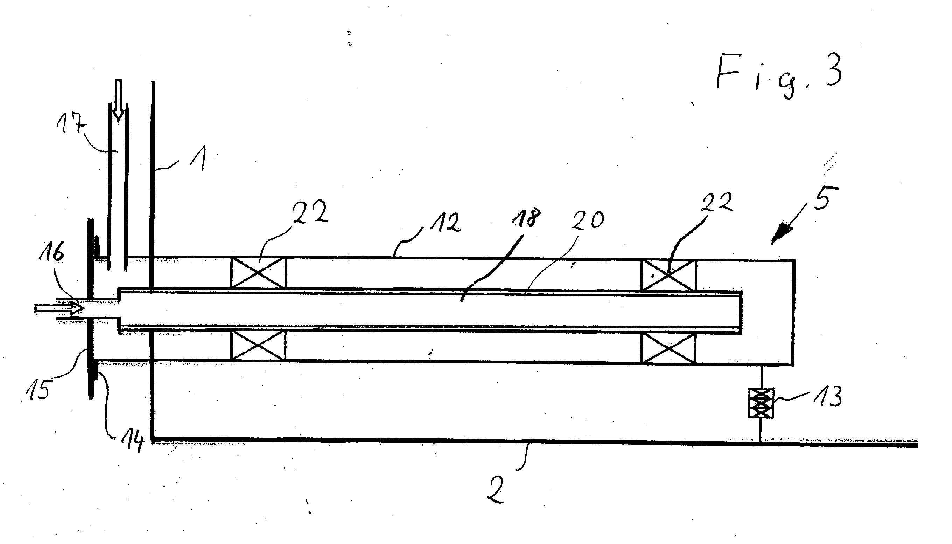

- Fig. 3: in vergrößerter Darstellung den Reaktor im Bereich einer Lanze im Schnitt und
- Fig. 4: in perspektivischer Darstellung den Aufbau einer Lanze.

Der in den Figuren stark vereinfacht dargestellte Reaktor weist einen im Wesentlichen zylindrischen Behälter 1 auf, mit einem Boden 2 und einem Deckel 3. Gefüllt ist der Behälter 1 mit Trägermaterial 4. Das von unten über Lanzen 5 in den Behälter 1 gepumpte Abwasser strömt zusammen mit Luft durch das Trägermaterial 4 nach oben, wobei das Trägermaterial einerseits als Filter für Schwebstoffe und andererseits als bioaktive Oberfläche zur Abwasserbehandlung dient. Das gereinigte Abwasser tritt dann nahe der Oberseite des Behälters 1 am Ausgang 6 aus diesem aus.

In den Behälter 1 gelangt das Abwasser über eine Ringleitung 7, welche den Behälter 1 umfasst und an der die in diesem Ausführungsbeispiel dargestellten Lanzen 5 wasserseitig angeschlossen sind. Über eine Pumpe 8 wird das Abwasser unter Druck in die Ringleitung 7 verbracht, von wo aus es über die Lanzen 5 in den unteren Bereich des Behälters 1 gelangt und dort langsam nach oben hin aufsteigt, beispielsweise mit einer Strömungsgeschwindigkeit von 10 m³ /(m²·h).

Um den Reaktor mit Sauerstoff zu versorgen, sind die Lanzen 5, deren Aufbau im Einzelnen noch weiter unten erläutert ist, an eine Ringleitung 28 luftseitig angeschlossen. Die Ringleitung 28 wird über einen Kompressor 9 mit Druckluft beaufschlagt. Zwischen Ringleitung 28 und dem luftseitigen Anschluss an der Lanze 5 ist ein elektrisch gesteuertes Ventil 10 angeordnet.

Jede Lanze 5 besteht aus einem mit ringförmig unterbrochenen Ausnehmungen 11 versehenen Edelstahlrohr 12, das die Behälterwand durchsetzt und radial in das Behälterinnere bis nahe zur Behältermitte ragt. Dieses Außenrohr 12 jeder Lanze 5 ist am behälterinnenseitigen Ende stirnseitig verschlossen. Es liegt parallel zum Behälterboden 2 und wird exakt horizontal ausgerichtet. Hierzu ist eine Nivellierschraube 13 nahe dem innenliegenden Rohrende vorgesehen, mit der eine Ausrichtung erfolgt. Danach wird das Außenrohr 12 fest und dicht mit dem Behälter 1 verschweißt und gegebenenfalls die Nivellierschraube 13 festgesetzt.

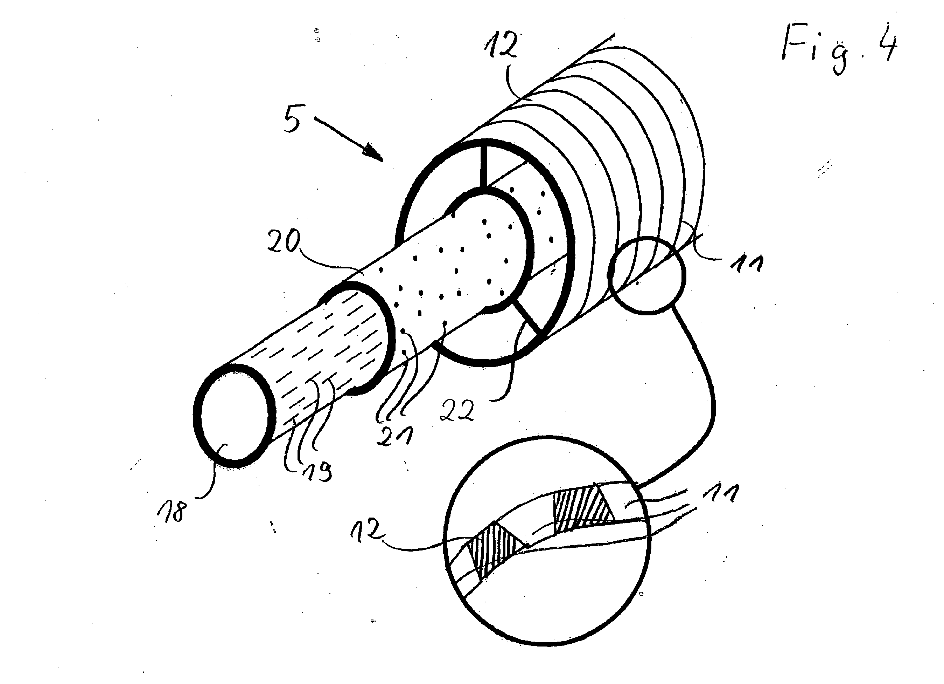

Die ringförmig unterbrochenen Ausnehmungen 11 sind von innen nach außen aufweitend ausgebildet, wie dies sich insbesondere aus der Einzelheit gemäß Fig. 4 ergibt. Sie sind nur in dem innerhalb des Behälters 1 liegenden Teil des Außenrohrs 12 vorgesehen. Außerhalb des Behälters 1 ist das Außenrohr mit einem Flansch 14 abgeschlossen und mit einem stirnseitigen Deckel 15 verschlossen, durch den eine Druckluftleitung 16 geführt ist. Ein wasserseitiger Anschluss 17 ist zwischen Behälterwand und Flansch 14 seitlich herausgeführt. Der wasserseitige Anschluss 17 ist mit der Ringleitung 7 verbunden und die Luftleitung 16 mit der Ringleitung 28, wobei hier ein Ventil 10 zwischengeschaltet ist, das elektrisch ansteuerbar ist.

Innerhalb des fest mit dem Behälter 1 verbundenen Außenrohrs 12 ist ein Innenrohr 18 angeordnet, das ebenfalls mit einer Vielzahl von Ausnehmungen in Form von Schlitzen 19 versehen ist, die sich im Wesentlichen gleichmäßig über Länge und Umfang des Innenrohrs 18 verteilen. Das Innenrohr 18 ist mit der Luftleitung 16 leitungsverbunden und mit einem elastischen Schlauch 20 umgeben, der eine Vielzahl von kleinen Öffnungen 21 aufweist, die ebenfalls über die gesamte Länge und den Umfang des Schlauches 20 verteilt angeordnet sind. Dabei sind die Öffnungen 21 dieses membranartigen Schlauches so konzipiert, dass sie, wenn der Schlauch 20 drucklos auf dem Innenrohr 18 liegt, im Wesentlichen verschlossen sind.

Erst wenn das Innenrohr 18 mit einem gegenüber dem Wasserdruck höheren Druck beaufschlagt wird, dehnt sich der Schlauch 20 aus und hebt sich zumindest abschnittsweise vom Innenrohr 18 ab. Dann gelangt die durch die Schlitze 19 des Innenrohrs 18 einströmende Luft durch die Öffnungen 21 in den Freiraum zwischen Schlauch 20 und Außenrohr 12.

Damit dieser Freiraum zu allen Seiten gleich groß ist, sind über die Länge des Innenrohrs 18 mehrere Abstandhalter 22 vorgesehen, welche den Schlauch 20 mit dem darin liegenden Innenrohr 18 umgreifen und innerhalb des Außenrohrs 12 zentrieren. Ein solcher Abstandhalter 22 ist beispielhaft in Fig. 4 dargestellt. Er ist so gestaltet, dass die Durchströmung des Freiraums möglichst wenig beeinflusst wird. Auch das Innenrohr 18 ist am behälterinnenseitigen Ende stirnseitig verschlossen. Über das Innenrohr 18 wird das im Freiraum zwischen Innenrohr 18 und Außenrohr 12 befindliche Wasser mit Luft in Form feinst verteilter Bläschen beaufschlagt. Der in dieser Luft befindliche Sauerstoff dient während der Abwasseraufbereitung zur Sauerstoffversorgung der am Trägermaterial 4 angelagerten Biomasse.

Um die Filterwirkung zu erhalten und überschüssige Biomasse zu entfernen, ist es erforderlich, in der Regel einmal täglich für ca. 1 Stunde zu spülen. Der vorstehend beschriebene Reaktor ist zur sektorweisen Spülung vorgesehen und weist insgesamt vier Sektoren I bis IV auf, wobei dem ersten Sektor I die Lanzen 5a, 5b, 5c, dem zweiten Sektor II die Lanzen 5e, 5f, 5g, dem dritten Sektor III die Lanzen 5c, 5d, 5e und dem vierten Sektor IV die Lanzen 5g, 5h, 5a zugeordnet sind.

Zum Spülen des ersten Sektors I werden zunächst über eine Steuerung 23 die Ventile 10 für die Lanzen 5a, 5b und 5c geöffnet und alle übrigen Ventile 10 geschlossen. Sodann wird die Ringleitung 8 mittels des Kompressors 9 mit Druckluft beaufschlagt. Hierdurch gelangt Druckluft in die Innenrohre 18 der Lanzen 5a, 5b und 5c. Diese nunmehr gegenüber dem Filterbetrieb mit deutlich höherer Geschwindigkeit austretende Druckluft reißt das umgebende Wasser im Bereich dieser Lanzen derart mit, dass die gewünschte Spülwirkung im Sektor I des Reaktors eintritt.

Nachdem dieser Sektor I freigespült ist, werden mittels der Steuerung 23 die Ventile 10 umgesteuert, derart, dass nun der gegenüberliegende Sektor II gespült wird. Es werden also die Ventile 10 der Lanzen 5e, 5f, 5g öffnend angesteuert und alle übrigen Ventile schließend. Nachdem der Sektor II gespült ist, wird der Sektor III gespült in analoger Weise und schließlich der Sektor IV. Während des Spülvorgangs bleibt die über die Pumpe 8 erfolgende Wasserzufuhr der Ringleitung 7 unverändert erhalten. Es hat sich erstaunlicher Weise gezeigt; dass dort, wo die Luftzufuhr erfolgt, sich auch eine erhöhte Wasserströmung einstellt, und zwar die für den Spülvorgang erforderliche.

Soweit es das Außenrohr 12 an einer Lanze5 angeht, sind die Ausnehmungen 11 so gestaltet, dass sich ihr Querschnitt von innen nach außen erweitert, so dass dort festsitzende Partikel spätestens durch den Spüldruck ausgespült werden. Innerhalb des Rohres sich festsetzende Partikel können ebenso wie das Innenrohr 18 und der elastische Schlauch 20 mechanisch entfernt werden, ohne das Trägermaterial 4 aus dem Behälter 1 entfernen zu müssen. Es ist lediglich das Wasser abzulassen, wonach der Deckel 15 vom Flansch 14 entfernt und das gesamte Innenrohr 18 mit Schlauch 20 und Abstandshaltern 22 zu Wartungs- und Austauschzwecken herausgezogen werden kann. Dann kann das Außenrohr 12 mit geeignetem Werkzeug im Innenbereich gereinigt und von Ablagerungen befreit werden, wonach die Inneneinheit 18, 20, 22 wieder eingesetzt und der Deckel 15 auf den Flansch geschraubt wird.

### Bezugszeichenliste

- 1: - Behälter
- 2: - Boden
- 3: - Deckel
- 4: - Trägermaterial
- 5: - Lanzen
- 6: - Ausgang
- 7: - Ringleitung wasserseitig
- 8: - Pumpe
- 9: - Kompressor
- 10: - gesteuerte Absperrventile
- 11: - Ausnehmungen
- 12: - Außenrohr
- 13: - Nivellierschraube
- 14: - Flansch
- 15: - Deckel
- 16: - Luftleitung
- 17: - wasserseitiger Anschluss
- 18: - Innenrohr
- 19: - Schlitze
- 20: - elastsicher Schlauch
- 21: - Öffnungen
- 22: - Abstandshalter
- 23: - Steuerung
- 28: - Ringleitung luftseitig

## Patentansprüche

1. Verfahren zum Spülen eines Reaktors zur biologischen Abwasserreinigung, bei dem zum Zwecke des Spülens ein Abschnitt des Reaktors mit Wasser und Luft mit erhöhter Geschwindigkeit durchströmt wird, **dadurch gekennzeichnet, dass** die Steuerung des Spülvorgangs ausschließlich über die Steuerung der Luftzufuhr erfolgt.

2. Verfahren nach Anspruch 1, **dadurch gekennzeichnet, dass** das Spülen sektorweise erfolgt, wobei nach dem Spülen eines ersten Sektors (I) ein gegenüberliegend angeordneter zweiter Sektor (II) gespült wird.

3. Verfahren nach Anspruch 2, **dadurch gekennzeichnet, dass** nach dem Spülen des zweiten Sektors (II) ein zwischen dem ersten und dem zweiten Sektor liegender dritter Sektor (III) gespült wird und nachfolgend ein gegenüberliegender vierter Sektor (IV).

4. Reaktor zur biologischen Abwasserreinigung mit einem mit Trägermaterial (4) gefüllten Behälter (1), der bodenseitig mit einer Vielzahl von in den Behälter (1) hineinragenden Lanzen (5) zum Einbringen von Wasser und Luft versehen ist, **dadurch gekennzeichnet, dass** die zu den Lanzen (5) führenden wasserführenden Leitungen (17) kontinuierlich mit Wasser druckbeaufschlagt sind und nur die zu den Lanzen (5) führenden luftführenden Leitungen (16) mit steuerbaren Absperrventilen (10) versehen sind.

5. Reaktor nach Anspruch 4, **dadurch gekennzeichnet, dass** die zu den Lanzen (5) führenden luftführenden Leitungen (16) entsprechend den zugeordneten Spülabschnitten (I, II; III; IV) gruppenweise steuerbar sind.

6. Reaktor nach einem der vorhergehenden Ansprüche, **dadurch gekennzeichnet, dass** eine Lanze (5) ein mit Ausnehmungen (11) versehenes, vorzugsweise aus Metall bestehendes Rohr (12) aufweist, wobei die Ausnehmungen (11) im Querschnitt von innen nach außen aufweitend ausgebildet sind.

7. Reaktor nach einem der vorhergehenden Ansprüche, **dadurch gekennzeichnet, dass** Mittel (13) zum Ausrichten des Rohrs (12) im Behälter (1) vorgesehen sind.

8. Reaktor nach einem der vorhergehenden Ansprüche, **dadurch gekennzeichnet, dass** ein Rohr (12) durch die Behälterwand durchgeführt, vorzugsweise dicht mit dieser verschweißt ist.

9. Reaktor nach einem der vorhergehenden Ansprüche, **dadurch gekennzeichnet, dass** innerhalb des mit Ausnehmungen (11) versehenen Rohrs (12) ein ebenfalls mit Ausnehmungen (19) versehenes Innenrohr (18) für die Luftzufuhr angeordnet ist, das von einem elastischen mit einer Vielzahl von Löchern (21) versehenem Schlauch (20) umgeben ist, wobei Mittel (22) vorgesehen sind, welche das Innenrohr (18) vom Außenrohr (12) beabstanden.

10. Reaktor nach einem der vorhergehenden Ansprüche, **dadurch gekennzeichnet, dass** jedem Innenrohr (18) ein steuerbares Absperrventil (10) zugeordnet ist und vorzugsweise alle Innenrohre (18) von einer gemeinsamen Druckluftleitung (28) gespeist sind.

11. Reaktor nach einem der vorhergehenden Ansprüche, **dadurch gekennzeichnet, dass** die Innenrohre (18) in die Außenrohre (12) von außerhalb des Behälters (1) einschiebbar bzw. herausziehbar sind.

12. Reaktor nach einem der vorhergehenden Ansprüche, **dadurch gekennzeichnet, dass** die Außenrohre (12) mit einer außerhalb des Behälters (1) angeordneten Druckwasserleitung (7) ständig verbunden sind.

13. Lanze für einen Reaktor nach einem der vorhergehenden Ansprüche, mit einem mit Ausnehmungen versehenen Außenrohr, **dadurch gekennzeichnet, dass** die Ausnehmungen (11) im Querschnitt von innen nach außen aufweitend ausgebildet sind.

14. Lanze nach Anspruch 13, **dadurch gekennzeichnet, dass** innerhalb des mit Ausnehmungen (11) versehenen Außenrohrs (12) ein ebenfalls mit Ausnehmungen (11) versehenes Innenrohr (18) für die Luftzufuhr angeordnet ist, das von einem elastischen mit einer Vielzahl von Löchern versehenem Schlauch umgeben ist, wobei Mittel (22) vorgesehen sind, welche das Innenrohr (18) vom Außenrohr (12) beabstanden.

15. Lanze nach einem der vorhergehenden Ansprüche, **dadurch gekennzeichnet, dass** das Innenrohr (18) in das Außenrohr (12) einschiebbar bzw. aus diesem ausziehbar angeordnet ist.
